# EUROPEAN PATENT APPLICATION

(11) **EP 3 835 604 A1**
(43) Date of publication of application: **16.06.2021**
(21) Application number: 18929298.0
(22) Date of filing: 07.08.2018
(51) Int. Cl.: F16B 39/24, F16B 43/00

(54) **LOCK WASHER AND FASTENING STRUCTURE**

(71) Applicant: Bolt Engineer Co., Kobe-shi, Hyogo 651-2404 (JP)
(72) Inventor: SAEKI Hiroshi, Kobe-shi Hyogo 6512404 (JP)
(74) Representative: Stöckeler, Ferdinand
(86) International application number: PCT/JP2018/029562
(87) International publication number: WO 2020/031252

(57) **Abstract**

Provided is a lock washer (1) that is provided between a nut (4) and an attachment object (2), and made of first and second members (11), (12) used in a stacked state. The first member (11) includes an upper surface (11a) in which irregularities are formed radially so that resistance is smaller when a nut (4) is turned in a tightening direction, and frictional resistance is larger when the nut (4) is turned to a loosening side, and a lower surface (11b) in which slopes (11ba) are formed so as to be gradually lowered in height toward the tightening direction of the nut (4) along a circumferential direction. The second member (12) includes a lower surface (12a) in which irregularities are formed radially so that resistance is smaller when the nut (4) is turned in the tightening direction and frictional resistance is larger when the nut (4) is turned to the loosening side, an upper surface (12b) in which slopes (12ba) are formed along the circumferential direction, corresponding to the slopes (11ba) of the first member (11), the upper surface (12b) coming into contact with the lower surface (11b) of the first member (11), and projected portions (12c) to rotate in a state stacked on the first member (11) when the nut (4) is loosened.

## Description

### Technical field

The present invention relates to a lock washer and a fastening structure.

### Background Art

While for a long time, many ideas have been made and put into practical use to prevent loosening, such as a method using a spring washer, a method using a double nut, and a method of passing a split pin through a nut and a bolt, effects are insufficient, so that loosening may occur due to vibration or the like, and a mechanism and processing may be complicated and expensive.

Consequently, as a lock washer, there has been proposed a lock washer in which an outer circumferential portion is flat, a central portion has a center hole into which a male screw can be inserted, an intermediate circumferential portion sandwiched between the center hole and the outer circumferential portion is divided into two or more parts and molded, divisions are connected to the center hole, they are radially divided into two or more equal parts by cutouts from the center hole to an inside of the flat portion of the outer circumferential portion, and one side of each cutout surface is raised to provide a nut locking piece, so that the lock washer has the nut locking pieces each resulting from forming a divided fan-shaped portion into a conical surface of a coned disc spring (see, for example, Patent Literature 1).

### Citation List

### Patent Literature

Patent Literature 1: JP No. 2011-127752A

### Summary of Invention

### Technical Problem

The lock washer described in Patent Literature 1 has a complicated structure, such as raising the one side of each of the cutout surfaces to provide the nut locking piece, and is difficult to process. Further, since each of the divided fan-shaped portions is formed into the conical surface of the coned disc spring, there remains a possibility that loosening occurs. In other words, it is within a range of a function that it is hard to loosen. Since a situation that loosening is impossible causes trouble, it remains in the range where it is hard to loosen.

The present invention provides a lock washer and a fastening structure that prevents a bolt or a nut from loosening in a fastened state and allows the bolt or the nut to be easily loosened at the time of maintenance.

### Solution to Problem

The invention of claim 1 is a lock washer provided between a head portion of a bolt or a nut and an attachment object when the attachment object is fixed to a member to be attached to, using the bolt or the nut, the lock washer including a first member and a second member that are used in a stacked state, in which the first member includes a first surface in which irregularities are formed radially so that resistance is smaller when the bolt or the nut is turned in a tightening direction, and frictional resistance is larger when the bolt or the nut is turned to a loosening side, and a second surface in which a single or a plurality of slopes are formed along a circumferential direction so as to be gradually lowered in height toward the tightening direction of the bolt or the nut, and the second member includes a third surface in which irregularities are formed radially so that resistance is smaller when the nut is turned in the tightening direction and frictional resistance is larger when the nut is turned to the loosening side, a fourth surface in which a single or a plurality of slopes are formed along the circumferential direction, corresponding to the slope of the second surface in the first member, the fourth surface coming into contact with the second surface of the first member, and an engagement portion for loosening to rotate in a state stacked on the first member when the bolt or the nut is loosened.

In this way, the bolt or the nut does not loosen in the fastened state, and can be easily loosened by using the engagement portion for loosening of the second member at the time of maintenance.

In this case, as described in claim 2, it is desirable that the slopes of the second surface of the first member, and the third surface of the second member are formed smoothly.

As described in claim 3, it is desirable that the engagement portion for loosening is a projected portion that is projected outward in a radial direction in the second member.

In this case, it is desirable that the second member has a larger thickness and a larger outer diameter than the first member.

As a fastening structure using the lock washer according to any one of claims 1 to 4, the invention of claim 5 is a fastening structure in which a screw rod of a bolt is passed through an attachment hole of a member to be attached to, a tip portion of the screw rod is projected, and a nut is applied to the tip portion via a washer to fix the attachment object to the member to be attached to, in which the washer is the lock washer according to any one of claims 1 to 4, and the invention of claim 6 is a fastening structure in which a screw rod of a bolt is passed through an attachment object via a washer to fix the attachment object to a member to be attached to, in which the washer is the lock washer according to any one of claims 1 to 4.

Further, in the fastening structure described above, the nut and the first member can also be integrally formed. The invention of claim 7, which has the above-described structure, is a fastening structure in which a screw rod of a bolt is passed through an attachment hole of a member to be attached to, a tip portion of the screw rod is projected, and a nut is applied to the tip portion via a washer to fix the attachment object to the member to be attached to, in which the nut includes a meshing engagement portion on a side of the washer, and a tip surface of the meshing engagement portion is formed so that a single or a plurality of slopes are gradually lowered in height toward a tightening direction of the nut along a circumferential direction, in the washer, irregularities are formed radially so that a surface on a side of the attachment object has smaller resistance when the nut is turned in the tightening direction, and has larger frictional resistance when the nut is turned to a loosening side, and a surface on a side of the nut is formed with a single or a plurality of slopes along the circumferential direction, corresponding to the slope of the meshing engagement portion so that the single or the plurality of slopes are engaged with the tip surface of the meshing engagement portion of the nut, and further the washer includes an engagement portion for loosening to rotate together with the nut when the nut is loosened. Advantageous Effects of Invention

In the present invention, the bolt or the nut does not loosen in the fastened state with the bolt or the nut, and can be easily loosened by using the engagement portion for loosening of the second member at the time of maintenance. Brief Description of Drawings

FIG. 1 is a cross-sectional view showing one embodiment of a fastening structure using a lock washer according to the present invention.
FIG. 2 is a plan view of the same.

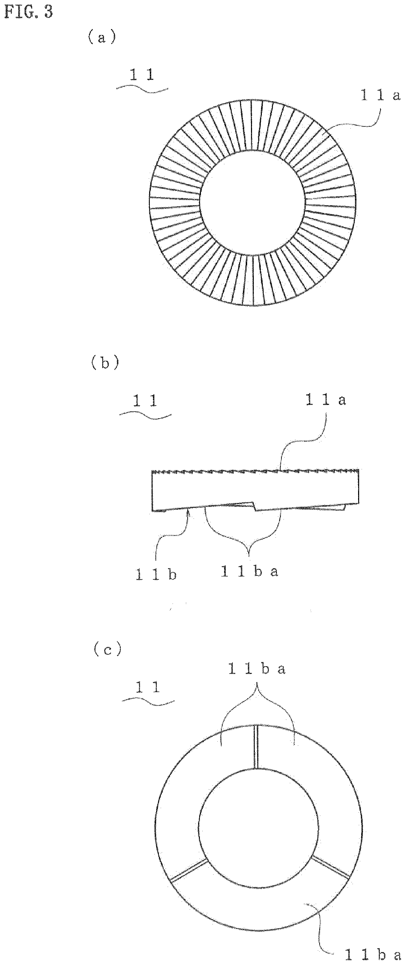

FIG. 3 is views showing a first member of the lock washer according to the present invention, (a) being a plan view, (b) being a side view, and (c) being a bottom view.
FIG. 4 is an explanatory view of a tool used to release fastening in the fastening structure shown in FIG. 1.
FIG. 5 is explanatory views when the fastening is released in the fastening structure shown in FIG. 1.
FIG. 6 is a cross-sectional view showing one embodiment of another fastening structure using a lock washer according to the present invention.
FIG. 7 is explanatory views of a tool used to release fastening in the fastening structure shown in FIG. 6.
FIG. 8 is a view showing a state where an engagement socket is mounted.
FIG. 9 is a cross-sectional view showing one embodiment of still another fastening structure.

### Description of Embodiments

Hereinafter, embodiments of the present invention will be described with reference to the drawings.

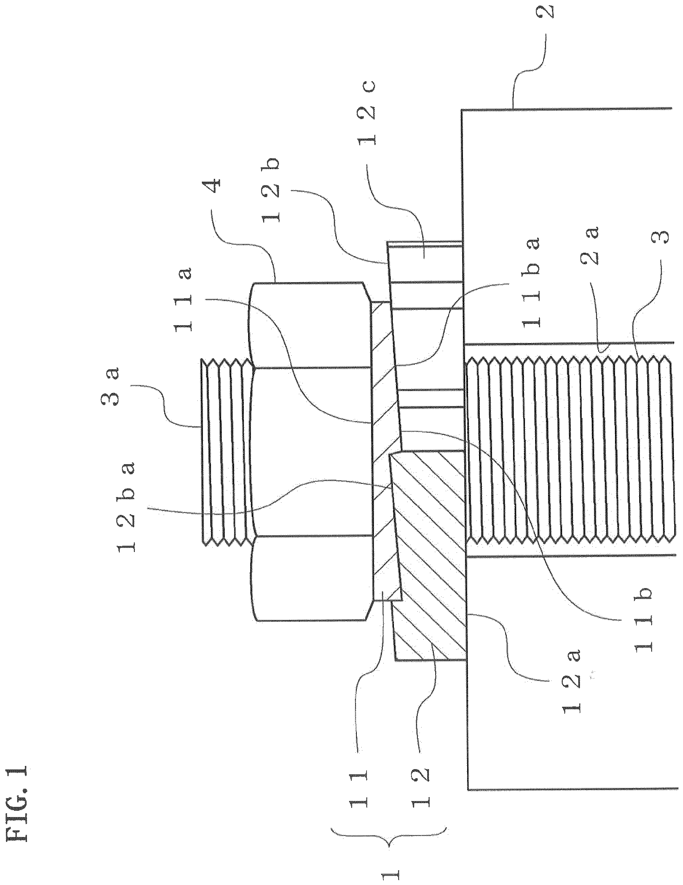

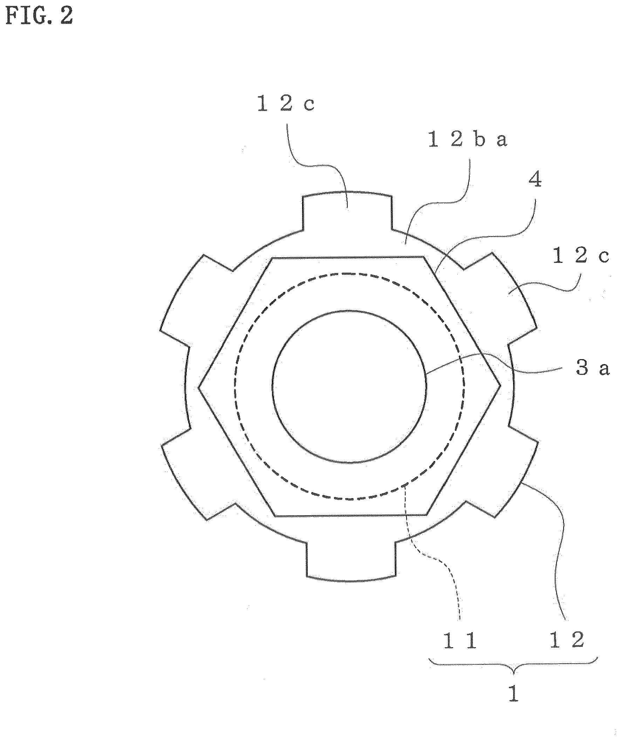

FIG. 1 is a cross-sectional view showing one embodiment of a fastening structure using a lock washer according to the present invention, and FIG. 2 is a plan view of the same.

For example, as shown in FIG. 1, when an attachment object 2 is fixed to a member to be attached to (not shown) by using a nut 4, a lock washer 1 according to the present invention is provided between the attachment object 2 and the nut 4. That is, the lock washer 1 is provided between the nut 4 and the attachment object 2, when a screw rod 3a of a bolt 3 for attaching the attachment object 2 is passed through an attachment hole of the member to be attached to (not shown) and a through hole 2a of the attachment object 2, a tip portion is projected from the through hole 2a, and the nut 4 is applied to the tip portion to fix the attachment object 2 to the member to be attached to.

The lock washer 1 is made of a first member 11 and a second member 12 that are used in a stacked state. That is, the lock washer 1 is a combination of the plate-shaped first and second members 11, 12.

As shown in FIG. 2, the first member 11 disposed on a side of the nut 4 has a smaller thickness (length in an axial direction of the bolt 3), and in an upper surface 11a (first surface), irregularities (so-called jaggedness) are radially formed by grooves extending in a radial direction. The irregularities in the upper surface 11a are formed so that frictional resistance is smaller when the nut 4 is turned in a tightening direction (clockwise), and the frictional resistance is larger when the nut 4 is turned to a loosening side (counterclockwise).

In a lower surface 11b (second surface) of the first member 11, three slopes 11ba, 11ba, 11ba are formed along a circumferential direction so that each of the slopes 11ba are gradually lowered in height in the tightening direction of the nut 4 (thickness becomes smaller). Inclination angles of the three slopes 11ba are the same, and they are slopes at a constant angle. The three slopes 11ba are repeatedly arranged along the circumferential direction. Note that a number of the slopes 11ba is not limited to three, and may be any number.

The second member 12 also has basically the same shape as the first member 11 except that it has a larger thickness and a larger outer diameter than the first member 11. That is, similarly to the first member 11, the second member 12 includes a lower surface 12a (third surface) in which irregularities are radially formed by grooves extending in the radial direction, and an upper surface 12b (fourth surface) having three slopes 12ba. The slopes 12ba of the upper surface 12b are formed corresponding to the slopes 11ba on the side of the lower surface 11b, and the upper surface 12b and the lower surface 11b are brought into contact with each other so that the slopes 12ba mesh with the slopes 11ba, and the lock washer 1 is used in a state where they are integrated. These slopes 11ba and 12ba are formed very smoothly and are easy to mutually slide.

An outer peripheral portion of the second member 12 has a spline shape having a plurality of projected portions 12c (engagement portions for loosening). In such a fastening structure, when the nut 4 tries to turn due to vibration or the like even a little in a loosening direction, that is, counterclockwise, the slopes 11ba, 12ba first start to mutually slide because the slopes 11ba, 12ba of both the members 2, 3, which are in contact with each other in a meshing manner, are formed very smoothly. This is because the irregularities of the upper surface 11a of the first member 11 in contact with the nut 4, and the lower surface 12a of the second member 12 in contact with the attachment object 2 are formed so that turning clockwise, which is the direction where the nut 4 is tightened, is easy, and turning counterclockwise, which is the loosening direction, is resisted with larger frictional resistance, as described before.

When sliding occurs between the first and second members 2, 3, the sliding occurs between the slopes 11ba, 12ba, so that a force acts on the nut 4 in a direction where the nut 4 is pushed upward. This increases an axial force of the bolt 3. As a result, a contact portion between the first member 11 and the nut 4, and a contact portion between the second member 12 and the attachment object 2 are pressed more strongly, so that the frictional resistance between them is further strengthened and these contact portions do not slide.

Then, the more the nut 4 moves to loosen, the stronger the nut 4 is tightened, and as a result, the nut 4 does not loosen.

Note that regarding the loosening, in this embodiment, the nut 4 does not loosen unless it is rotated by 120°. If in order to turn the nut 4 at the above-described angle for loosening, each of the angles of the three slopes 11ba, 12ba is properly selected so as to be equal to or greater than a lead angle of a screw of the bolt 3, a torque 1.5 to 3 times as large as a torque when the bolt is tightened is required. This torque is large enough to break the bolt 3, so that the nut 4 does not actually loosen.

On the other hand, in whatever device the fastening structure is used, it is necessary to loosen the tightened nut 4 in order to perform maintenance. This is because it is usually fixed by welding or the like in the case where it is not necessary to loosen it.

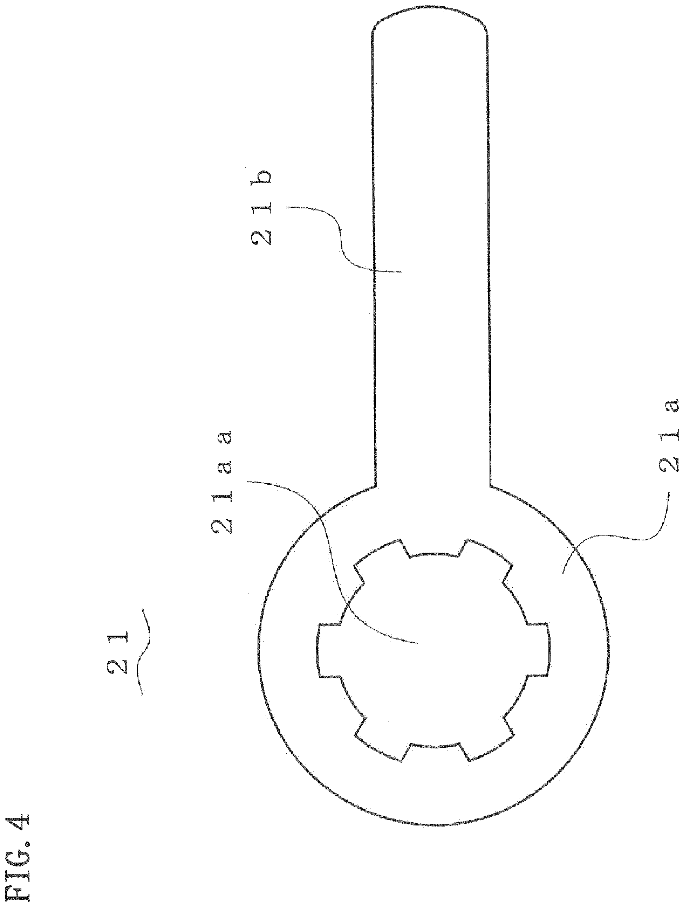

In the case of this embodiment, loosening, that is, releasing the fastening can be done, for example, by using a spanner 21 as a tool shown in FIG. 4. The spanner 21 has a fitting portion 21a in which a fitting hole 21aa having a shape corresponding to an outer shape of a second member 12 is formed, and a grip portion 12b extending outward from the fitting portion 21a.

The spanner 21 is fitted so that the fitting hole 21aa of the fitting portion 21a fits on an outside of the second member 12 whose projected portions 12c are projected outward in the radial direction, and the whole lock washer 1 is rotated counterclockwise, which allows the nut 4 to be loosened without touching the nut 4 at all.

This prevents the sliding function of the slopes 11ba, 12ba of the members 11, 12 does not work at all, so that the phenomenon that the bolt axial force increases and the nut 4 is further tightened does not occur, and even if the torque is slightly larger than a torque value during tightening, it can be easily loosened. This has also been confirmed experimentally.

In this way, the present invention is characterized in that the function of securely preventing loosening is ensured by making lengths of the slopes 11ba, 12ba, which are mating surfaces, sufficiently long, and the function for loosening is added by providing the projected portions 12c in the second member 12 that has a larger thickness and a larger diameter than the first member 11 to ensure a required strength, and using the projected portions 12c to enable loosening with the spanner 21 or the like.

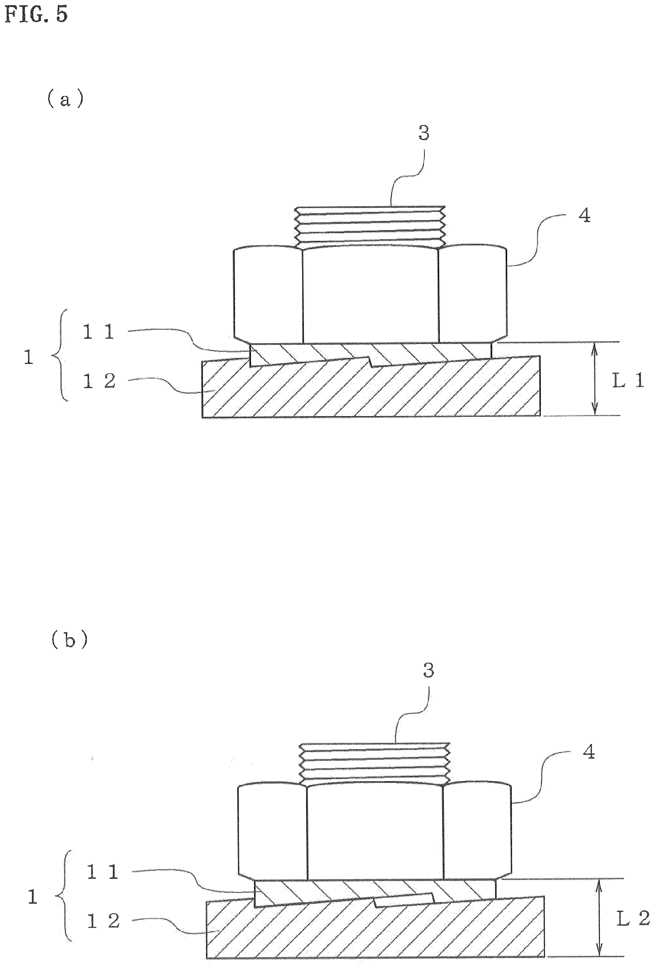

Moreover, immediately after tightening the nut 4, a thickness of the washer 1 (distance between the upper surface 11a and the lower surface 12a) is L1 as shown in FIG. 5(a), but in a state where the nut 4 is about to loosen due to vibration or the like, the thickness of the washer 1 increases to L2 (> LI), the axial force increases, and the nut 3 becomes excessively tightened, so that the nut 3 does not loosen, as shown in FIG. 5(b). In this state, since the axial force increases, it seems difficult to loosen at first glance, but when the second member 12 is rotated counterclockwise (in the loosening direction) using the projected portions 12c of the second member 12, the rotation changes the thickness of the washer 1 from the state shown in FIG. 5(b) to the state shown in FIG. 5(a). This decreases the thickness of the washer 1 (distance between the upper surface 11a and the lower surface 12a) from L2 to L1, and as a result, the axial force decreases, so that the washer 1 becomes easier to turn, resulting in loosening of the nut 4.

Therefore, once the nut 4 is tightened, it will never loosen due to the function of the washer 1, but if it is to be loosened, it can be easily loosened using the projected portions 12c.

Note that instead of the above-described spanner 6, an impact socket having fitting holes having the above-described shape may be fitted to loosen the nut 4 by turning it counterclockwise with a hydraulic wrench or an air impact wrench.

The above-described lock washer 1 can be applied to bolts of any size, from small-diameter bolts to large-diameter bolts, and can prevent the nut from loosening with respect to the screw rod of the bolt, so that it is possible to securely prevent loosening of the nut or the like due to vibration of a machine, shaking of an earthquake, or the like.

In this way, in the case of the structure using the lock washer 1, since the principle of further tightening the nut 4 if the nut 4 moves even a little is used, the nut does not loosen. On the other hand, in the case of most structures using a normal washer, once a nut loosen even a little due to vibration or the like, and moves counterclockwise, a bolt loses an axial force and then the nut gradually loosens.

While the foregoing fastening structure is a structure in which when the lock washer 1 tries to loosen and rotates in the reverse direction, the lock washer 1 is consequently tightened excessively, when the lock washer 1 is put into such a state tightened excessively due to, for example, vibration or the like, the lock washer 1 (second member 12) is forcibly turned and loosened with the spanner 6 for maintenance. At this time, since the lower surface 12a of the second member 12 is formed with the irregularities, the lower surface 12a of the second member 12 rubs a surface of the attachment object 2 when loosening, which makes the surface of the attachment object 2 rough. Therefore, it may be necessary to repair the rough surface with a file or the like at the time of reassembly.

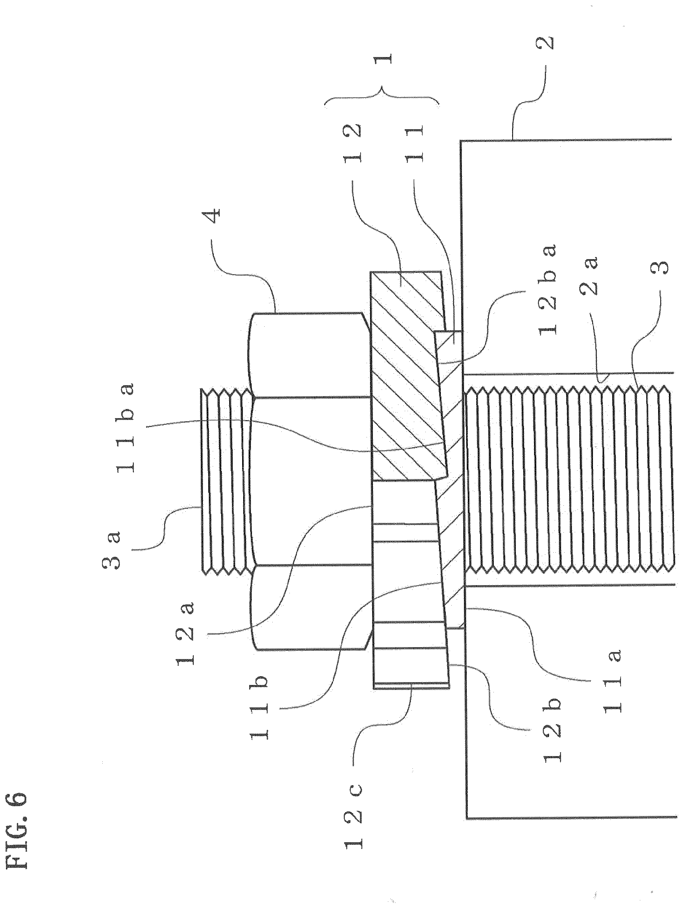

Consequently, when in order to eliminate the need for such repair, as shown in FIG. 6, contrary to the fastening structure described above, a fastening structure is employed in which the second member 12 is on the upper side and the first member 11 is on the lower side, fixing the second member 12 and rotating the nut 4 allows the nut 4 to be loosen while avoiding roughening the surface of the attachment object 2. At this time, the lower surface (contact surface) of the nut 4 is roughened by the rotation of the second member 12, but since the nut 4 is much cheaper than the attachment object 2, a large loss will not occur even if it is replaced with a new one,.

In the case of this fastening structure, when loosening is performed, it is necessary to securely fix the second member 12 so as not to rotate, and then rotate only the nut 4. This is because if the second member 12 rotates at the same time, the locking function of the lock washer 1 works, and the lock washer 1 is tightened excessively.

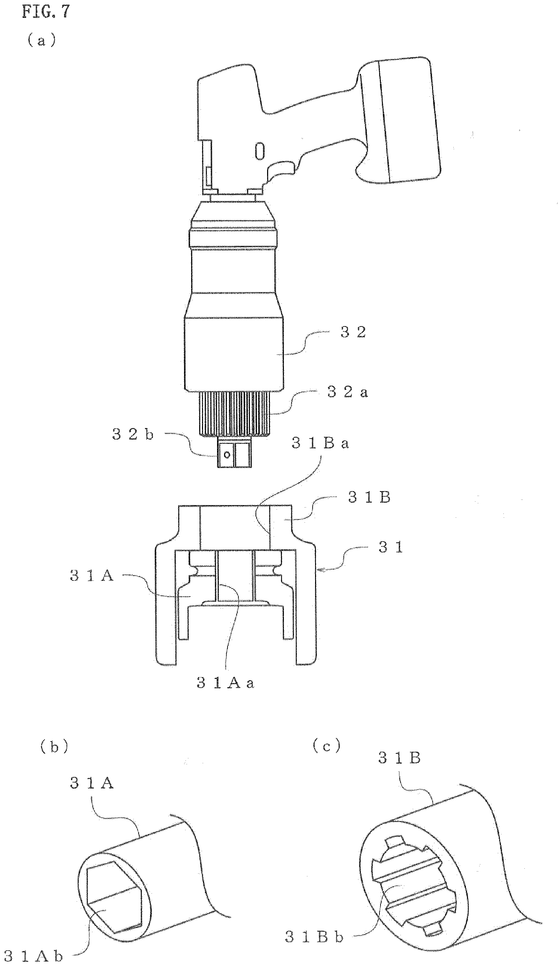

Consequently, as a tool for fixing the second member 12 (the lock washer 1) and turning only the nut 4, for example, a tool shown in FIG. 7 can be used. That is, as shown in FIG. 7(a), the tool is an electric torque wrench 32 on which an engagement socket 31 provided with an external socket 31B outside an internal socket 31A is mounted to rotate only the internal socket 31a, the external socket 31B fitting onto the second member 12, and the internal socket 31A fitting onto the nut 4. Here, 32a denotes a spline-shaped engaging projected portion that fits into an engagement hole 31Ba of the outer socket 31B, and 32b denotes an engaging projected portion that fits into an engagement hole 31Aa of the inner socket 31A. The inner socket 31A is formed with a fitting hole 31Ab that fits onto the nut 4 as shown in FIG. 7(b), and the outer socket 31B is formed with a fitting hole 31Bb that fits onto the second member 12, as shown in FIG. 7(c).

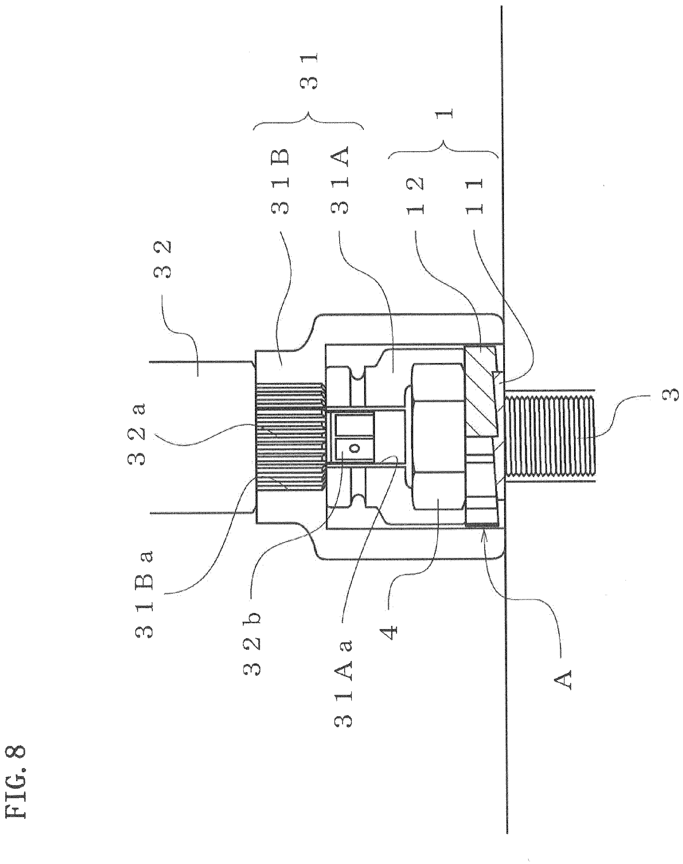

In order to release the fastening, first, the outer socket 31B is fitted onto the second member 12, and the inner socket 31A is fitted onto the nut 4, as shown in FIG. 8. Note that the second member 12 (washer 1) and the outer socket 31B are fitted in a portion indicated by A.

Then, the inner socket 31A fitted onto the nut 4 may be rotated by the electric torque wrench 32 to rotate the nut 4. At this time, since the outer socket 31B is fitted onto the second member 12 and fixes the second member 12 so that the washer 1 does not rotate, the nut 4 can be very quickly loosened by turning only the nut 4 without rotating the washer 1.

### (Others)

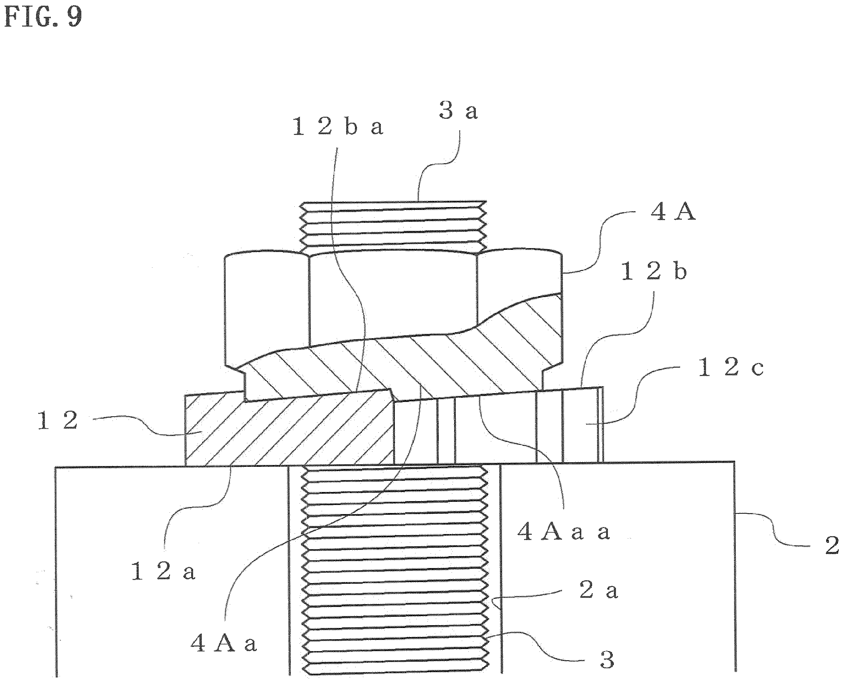

(i) While in the above-described embodiments, the outer peripheral portion of the second member 12 has a spline shape having the plurality of projected portions 12c, but only one projected portion 12c may be used. Further, it goes without saying that the spline shape can be replaced with a hexagonal shape or a dodecagonal shape, and an outer peripheral surface can be used as an engagement portion for loosening. Further, it is also possible to employ a configuration in which instead of the projected portions 12c, depressed portions are formed in the second member 12, and that projected portions that are engaged with the depressed portions so as to be able to be engaged and disengaged are provided in the fitting hole of the spanner.
(ii) While the above-described embodiments, the fastening structure in which the screw rod of the bolt is passed through the attachment hole of the member to be attached, the tip portion is projected, and the nut is applied to the tip portion to fix the attachment object to the member to be attached to is applied to the lock washer provided between the nut and the attachment object to prevent the nut from loosening, the present invention is not limited to this, but in the fastening structure in which the screw rod of the bolt is passed through the attachment object to fix the attachment object to the member to be attached to, a lock washer provided between a bolt head portion and the attachment object can be similarly applied to prevent the bolt from loosening.
(iii) While in the above embodiments, the fastening structure configured of the lock washer 1 made of the first and second members 11, 12, and the nut 4 has been described, the first member and the nut can be integrally molded to omit the first member. Specifically, as shown in FIG. 9, a fastening structure may be such that a nut 4A has a special shape including a meshing engagement portion 4Aa having a shape corresponding to the first member 11 on a side of the second member 12 as a washer, and a tip surface 4Aaa (corresponding to the lower surface 11b of the first member 11) of the meshing engagement portion 4Aa is formed so that a single or a plurality of slopes are gradually lowered in height toward the tightening direction of the nut along the circumferential direction, and the second member 12 as the specially shaped washer is formed with irregularities radially so that the lower surface 12a on the side of the attachment object 2 has smaller resistance when the nut 4Ais turned in the tightening direction, and has larger frictional resistance when the nut 4A is turned to the loosening side, and the upper surface 12b on a side of the nut 4A is formed so that a single or a plurality of slopes are formed corresponding to the slopes of the meshing engagement portion 4Aa along the circumferential direction to be engaged with the tip surface 4Aaa of the meshing engagement portion 4Aa of the nut 4A, and the second member 12 further includes an engagement portion for loosening 12c to rotate together with the nut 4A when the nut 4A is loosened. Even in that case, the same effects as those of the above-described embodiments can be exerted.

### Reference Sings List

- 1: lock washer
- 2: attachment object
- 2a: through hole
- 3: bolt
- 3a: screw rod
- 4,4A: nut
- 4Aa: meshing engagement portion
- 4Aaa: tip surface
- 11: first member
- 11a: upper surface (first surface)
- 11b: lower surface (second surface)
- 11ba: slope
- 12: second member
- 12a: lower surface (third surface)
- 12b: upper surface (fourth surface)
- 12ba: slope
- 12c: projected portion (engagement portion for loosening)
- 21: spanner
- 21a: fitting portion
- 21aa: fitting hole
- 21b: grip portion
- 31: engagement socket
- 31A: inner socket
- 31Aa: engagement hole
- 31Ab: fitting hole
- 31B: outer socket
- 31Ba: engagement hole
- 31Bb: fitting hole
- 32: electric torque wrench
- 32a,32b: engaging projected portion

## Claims

1. A lock washer provided between a head portion of a bolt or a nut and an attachment object when the attachment object is fixed to a member to be attached to, using the bolt or the nut, the lock washer comprising a first member and a second member that are used in a stacked state,
wherein the first member includes a first surface in which irregularities are formed radially so that resistance is smaller when the bolt or the nut is turned in a tightening direction, and frictional resistance is larger when the bolt or the nut is turned to a loosening side, and a second surface in which a single or a plurality of slopes are formed along a circumferential direction so as to be gradually lowered in height toward the tightening direction of the bolt or the nut, and
the second member includes a third surface in which irregularities are formed radially so that resistance is smaller when the nut is turned in the tightening direction and frictional resistance is larger when the nut is turned to the loosening side, a fourth surface in which a single or a plurality of slopes are formed along the circumferential direction, corresponding to the slope of the second surface in the first member, the fourth surface coming into contact with the second surface of the first member, and an engagement portion for loosening to rotate in a state stacked on the first member when the bolt or the nut is loosened.

2. The lock washer according to claim 1, wherein the slopes of the second surface of the first member, and the third surface of the second member are formed smoothly.

3. The lock washer according to claim 1 or claim 2, wherein the engagement portion for loosening is a projected portion that is projected outward in a radial direction in the second member.

4. The lock washer according to claim 3, wherein the second member has a larger thickness and a larger outer diameter than the first member.

5. A fastening structure in which a screw rod of a bolt is passed through an attachment hole of a member to be attached to, a tip portion of the screw rod is projected, and a nut is applied to the tip portion via a washer to fix the attachment object to the member to be attached to, wherein the washer is the lock washer according to any one of claims 1 to 4.

6. A fastening structure in which a screw rod of a bolt is passed through an attachment object via a washer to fix the attachment object to a member to be attached to, wherein the washer is the lock washer according to any one of claims 1 to 4.

7. A fastening structure in which a screw rod of a bolt is passed through an attachment hole of a member to be attached to, a tip portion of the screw rod is projected, and a nut is applied to the tip portion via a washer to fix the attachment object to the member to be attached to, wherein
the nut includes a meshing engagement portion on a side of the washer, and a tip surface of the meshing engagement portion is formed so that a single or a plurality of slopes are gradually lowered in height toward a tightening direction of the nut along a circumferential direction,
in the washer, irregularities are formed radially so that a surface on a side of the attachment object has smaller resistance when the nut is turned in the tightening direction, and has larger frictional resistance when the nut is turned to a loosening side, a surface on a side of the nut is formed with a single or a plurality of slopes along the circumferential direction, corresponding to the slope of the meshing engagement portion so that the single or the plurality of slopes are engaged with the tip surface of the meshing engagement portion of the nut, and further the washer includes an engagement portion for loosening to rotate together with the nut when the nut is loosened.
